# EUROPÄISCHE PATENTSCHRIFT

(11) **EP 1 320 556 B1**
(45) Veröffentlichungstag und Bekanntmachung des Hinweises auf die Patenterteilung: **08.12.2004**
(21) Anmeldenummer: 01982370.7
(22) Anmeldetag: 27.09.2001
(51) Int. Cl.: C08F 8/02, C07C 37/14

(54) **VERFAHREN ZUR HERSTELLUNG VON POLYISOBUTENYLPHENOLEN**
METHOD FOR PRODUCING POLYISOBUTENYLPHENOLES
PROCEDE DE FABRICATION DE POLYISOBUTENYLPHENOLS

(30) Priorität: 28.09.2000 DE 10048150
(43) Veröffentlichungstag der Anmeldung: 25.06.2003
(73) Patentinhaber: BASF AKTIENGESELLSCHAFT, 67056 Ludwigshafen (DE)
(72) Erfinder: LANGE, Arno, 67098 Bad Dürkheim (DE); RATH, Hans, Peter, 67269 Grünstadt (DE)
(74) Vertreter: Pohl, Michael, Dr.
(86) Internationale Anmeldenummer: PCT/EP2001/011209
(87) Internationale Veröffentlichungsnummer: WO 2002/026839

(56) Entgegenhaltungen:
- EP-A- 0 831 141
- US-A- 4 429 099
- US-A- 5 300 701

## Beschreibung

Die vorliegende Erfindung betrifft ein Verfahren zur Herstellung von Polyisobutenylphenolen durch Alkylierung einer aromatischen Hydroxyverbindung mit im Wesentlichen homopolymeren Polyisobutenen in Gegenwart eines Lewis-sauren Alkylierungskatalysators.

Es ist bekannt, aromatische Hydroxyverbindungen zur Herstellung von Polyalkgnylphenolen mit Polyolefinen unter Verwendung saurer Katalysatoren zu alkylieren. Diese sogenannte Friedel-Crafts-Alkylierung führt in der Regel nicht zu reinen Monoalkylierungsprodukten, da die alkylierten Produkte reaktionsfähiger sind als die unsubstituierten Ausgangsprodukte. Daher entsteht meist ein Gemisch verschiedener Mono-, Di- und Polyalkylierungsprodukte. Zudem treten beim Einsatz höhermolekularer Alkylierungsmittel sowohl am Polyolefin als auch am alkylierten Produkt häufig Fragmentierungsreaktionen auf, so dass in der Regel ein komplex zusammengesetztes Produktgemisch erhalten wird.

Für viele technische Anwendungen sind derartige Mischungen untauglich. Vielmehr sind Produkte definierter Zusammensetzung erforderlich, häufig Monoalkylierungsprodukte, wobei auch die Position der Alkylierung relevant sein kann.

Polyisobutenylphenol beispielsweise ist ein wichtiges Ausgangsprodukt zur Herstellung von Kraftstoffdetergenzien und wird selbst als Kraftstoffadditiv eingesetzt. Dabei ist es von Vorteil, wenn das Phenol im Wesentlichen monoalkyliert und/oder in der para-Position substituiert ist.

Um den Anteil an Monoalkylierungsprodukten zu erhöhen, schlägt der Stand der Technik vor, die Phenolkomponente in einem großen Überschuss einzusetzen. Nachteilig an dieser Verfahrensmaßnahme ist die erforderliche Abtrennung großer Mengen nichtumgesetzter Phenole aus dem erhaltenen Produktgemisch.

Die GB-A-1 159 368 offenbart die Alkylierung von Phenol mit monoolefinischen polymeren Alkylierungsmitteln mit Molekulargewichten von 700 bis 300000 unter Verwendung von Bortrifluorid-Phenolat.

Die US 4,238,628 offenbart ein Verfahren zur Alkylierung von Benzol, Phenol und Naphthol, mit Polyolefinen aus Monomeren mit mindestens drei Kohlenstoffatomen, bevorzugt Polybuten, in Gegenwart von Bortrifluorid als Katalysator. Vor der Alkylierungsreaktion muss das Olefin-Polymer mit Ethylen zur Reaktion gebracht werden, um eine weitgehende Ethylen-Terminierung zu erhalten. Die Ausbeute an Alkylphenol liegt nur bei 44 bis 64 %.

Die US 4,429,099 offenbart die Alkylierung von Phenol oder substituierten Phenolen mit Bis-(Polyisobuten)benzol oder Tris-(Polyisobuten)benzol mit Molekulargewichten von ca. 700 bis 50000 bzw. ca. 1000 bis 75000. Als Katalysatoren sind AlCl₃, AlBr₃, BF₃, BF₃O(C₂H₅)₂, TiCl₄, SnCl₄, AlC₂H₅Cl₂, FeCl₃, SbCl₅ und SbF₅ offenbart. Die Polyisobutene sind Vinyliden-terminiert. Es wird ein hoher Phenolüberschuss eingesetzt, und es sind lange Reaktionszeiten erforderlich.

Die WO-A-94/14739 lehrt ein Verfahren zur Herstellung von Polyisobutenylhydroxyaromaten. Bei dem Verfahren wird eine hydroxyaromatische Verbindung, z. B. Phenol, Katechol, Resorcinol, Hydrochinon oder Pyrogallol, mit einem Polyisobuten mit einem zahlengemittelten Molekulargewicht von 300 bis 5000 in Gegenwart eines sauren Alkylierungskatalysators umgesetzt. Dabei ist es erforderlich, dass das Polyisobuten (PIB) mindestens 70 % Vinyliden-Terminierung (α-Olefin) enthält. Das Verhältnis PIB:Phenol soll dabei in den Grenzen 1:1,2 bis 1:5 variieren. Bevorzugt sind jedoch Verhältnisse von 1:2 bis 1:3, und in den offenbarten Beispielen wird Phenol einheitlich mit 100 % Überschuss (1:2) eingesetzt. Es wird ohne einen Beleg durch ein Ausführungsbeispiel behauptet, dass die erhaltenen Polyisobutenylphenole 70 bis 100 % para-Substitution aufweisen würden, während Polyisobutenphenole aus konventionellem Polyisobuten mit geringem Anteil an α-Olefinen (low vinylidene polyisobutenes = 2 bis 6 % α-Olefinanteil im Sinne der WO 94/14739) nur 0 bis 40 % para-Substitution aufweisen würden. Dies steht im Widerspruch zu den experimentellen Befunden gemäß der EP-A-0 831 141. Beispiel 1 dieses Dokuments entspricht hinsichtlich Art und Menge der Einsatzstoffe (speziell des eingesetzten hochreaktiven Polyisobutens), des eingesetzten Katalysators, Lösungsmittels sowie der Reaktionszeit und -dauer dem Beispiel 1 der WO-A-94/14739. Dennoch wird nur ein Polyisobutenylphenol mit 75 % para-Substitution erhalten. Hier wird die gängige Lehre bestätigt, dass hochreaktives PIB zu hohem Nebenproduktanteil führt.

In J. Polym. Sci. A, 31, S. 1938, (1993) wird die Verwendung von SnCl₄ als Katalysator beschrieben. Auch dabei wird Phenol in großem Überschuss eingesetzt.

Kennedy, Guhaniyogi und Percec (Polym. Bull. 8, 563 (1970)) lehren die Verwendung von BF₃-Diethyletherat als Alkylierungskatalysator, wobei das Verhältnis PIB:Phenol 1:2,5 oder 1:1,7 (jeweils bezogen auf die Polyisobutenylendgruppen) beträgt.

Den bisher bekannten Verfahren zur Alkylierung hydroxyaromatischer Verbindungen mit Polyolefinen ist gemeinsam, dass sie mindestens einen und in der Regel mehrere der folgenden Nachteile aufweisen:

Es werden große Phenolüberschüsse und/oder Katalysatormengen benötigt,
das eingesetzte Polyolefin muss einen hohen Anteil α-Olefin-Terminierung enthalten,
es finden Fragmentierungsreaktionen des Polyolefins oder des alkylierten Produkts statt,
es werden auch unerwünschte Nebenprodukte erhalten, wie Polyalkylierungsprodukte oder an unerwünschter Position alkylierte Produkte,
die Reaktionszeiten sind lang.

Keines der zuvor genannten Dokumente beschreibt den Einsatz von Lewis-sauren Alkylierungskatalysatoren in Kombination mit (im Falle von BF₃ bestimmten) Ethern als Cokatalysatoren.

Der vorliegenden Erfindung liegt die Aufgabe zugrunde, ein verbessertes Verfahren zur Alkylierung von aromatischen Hydroxyverbindungen zur Verfügung zu stellen. Dabei sollen (soweit von Eduktseite möglich) vorzugsweise überwiegend Monoalkylierungsprodukte resultieren, wobei auf einen großen Überschuss der Phenolkomponente verzichtet werden kann. Bevorzugt sollen bei der Alkylierungsreaktion im Wesentlichen keine Fragmentierungsreaktionen des Polyalkens oder des alkylierten Produkts stattfinden. Soweit möglich, sollen vorzugsweise in para-Position zur OH-Funktion alkylierte Produkte resultieren. Insbesondere soll sich das Verfahren auch zur Alkylierung von Polyalkenen eignen, die einen größeren Anteil an nicht α-ständigen Doppelbindungen aufweisen.

Überraschenderweise wurde nun gefunden, dass diese Aufgabe durch ein Alkylierungsverfahren gelöst wird, bei dem die Reaktivität durch geeignete Maßnahmen herabgesetzt wird. Dies kann auf der Seite des Lewis-sauren Alkylierungskatalysators erfolgen, indem er in Kombination mit einem (im Falle von BF₃ bestimmten) Ether als Cokatalysator eingesetzt wird.

Gegenstand der vorliegenden Erfindung ist ein Verfahren zur Herstellung von Polyisobutenylphenolen durch Alkylierung einer aromatischen Hydroxyverbindung mit im Wesentlichen einfach ethylenisch ungesättigten und im Wesentlichen homopolymeren Polyisobutenen in Gegenwart eines Lewis-sauren Alkylierungskatalysators, das dadurch gekennzeichnet ist, dass zusätzlich ein Ether als Cokatalysator eingesetzt wird, wobei im Falle von BF₃ als Lewis-Säure der Ether ein Molekulargewicht von mindestens 102 g/mol aufweist.

Unter Lewis-sauren Alkylierungskatalysatoren werden im Rahmen dieser Anmeldung sowohl einzelne Akzeptoratome als auch Akzeptoratom-Ligand-Komplexe, Moleküle, etc. verstanden, sofern diese insgesamt (nach außen) Lewis-saure (Elektronenakzeptor-)Eigenschaften aufweisen. Bevorzugte Katalysatoren sind die Halogenide von Bor, Aluminium, Zinn oder einem Übergangsmetall, wie vorzugsweise Titan und Eisen. Besonders bevorzugt sind BF₃, SnCl₄, TiCl₄ und FeCl₃.

Erfindungsgemäß werden die Alkylierungskatalysatoren (Lewis-Säuren) gemeinsam mit wenigstens einem Ether als Cokatalysator eingesetzt. Im Falle von BF₃ muss dieser Ether ein Molekulargewicht von mindestens 102 g/mol aufweisen. Ether mit einem Molekulargewicht von mindestens 102 g/mol sind insgesamt die bevorzugte Ausführungsform. Besonders bevorzugt liegt das Molekulargewicht der Ether in einem Bereich von 102 bis 242 g/mol.

Als Cokatalysatoren geeignete Ether mit einem Molekulargewicht von weniger als 102 g/mol sind z. B. Dimethylether, Ethylmethylether und Diethylether. Als Cokatalysatoren bevorzugte Ether sind ausgewählt unter symmetrischen und unsymmetrischen Ethern, die zwei Kohlenwasserstoffreste mit insgesamt 6 bis 16 Kohlenstoffatomen aufweisen. Bei diesen Kohlenwasserstoffresten kann es sich um aliphatische, cycloaliphatische oder aromatische Reste handeln. Geeignet sind auch cyclische Ether, bei denen die Ethergruppe Bestandteil des Rings ist. Bevorzugt sind Di-(C₃-C₈)alkylether, wie Di-n-propylether, Diisopropylether, Methyl-tert.butylether, Isopropyl-tert.-butylether, Tetrahydrofuran, Di-(C₅-C₈)cycloalkylether, wie Dicyclohexylether und Ether mit mindestens einem aromatischen Kohlenwasserstoffrest, wie Anisol.

Die zur Alkylierung eingesetzte aromatische Hydroxyverbindung ist vorzugsweise ausgewählt unter phenolischen verbindungen mit 1, 2 oder 3 OH-Gruppen, die gegebenenfalls wenigstens einen weiteren Substituenten aufweisen können. Bevorzugte weitere Substituenten sind C₁-C₈-Alkylgruppen und insbesondere Methyl und Ethyl. Bevorzugt sind insbesondere Verbindungen der allgemeinen Formel 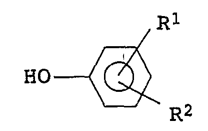 worin R¹ und R² unabhängig voneinander für Wasserstoff, OH oder CH₃ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Unter einem im Wesentlichen homopolymeren Polyisobuten wird im Rahmen dieser Erfindung ein Polyisobuten verstanden, das zu mehr als 90 Gew.-% aus Isobuteneinheiten besteht. Geeignete Comonomere sind C₃-C₆-Alkene, bevorzugt n-Buten. Herstellung und Struktur der Oligo-/Polyisobutene sind dem Fachmann bekannt (z. B. Günther, Maenz, Stadermann in Ang. Makrom. Chem. 234, 71 (1996)). Besonders bevorzugt sind Homopolyisobutene mit einem zahlenmittleren Molekulargewicht im Bereich von etwa 300 bis 5000. Besonders bevorzugte Molekulargewichtsbereiche sind 400 bis 3000 und insbesondere 500 bis 2500. Die Polydispersizität PD der Polyolefine liegt bevorzugt in einem Bereich von 1,05 bis 3,0. Sie kann gewünschtenfalls aber auch höher liegen, wie z. B. größer als 5 oder sogar größer als 12 sein.

Vorteilhafterweise eignet sich das erfindungsgemäße Verfahren sowohl zur Alkylierung von Polyisobutenen, die einen hohen Anteil, z. B. wenigstens 85 Mol-% an α-ständigen Doppelbindungen aufweisen, als auch insbesondere zur Alkylierung von Polyisobutenen, die einen geringeren Anteil an α-ständigen Doppelbindungen aufweisen. Somit ermöglicht das erfindungsgemäße Verfahren auch den Einsatz großtechnisch zugängiger Polyisobutengemische zur Alkylierung. Vorteilhafterweise treten dabei die aus dem Stand der Technik bekannten Nachteile und dabei insbesondere Fragmentierungsreaktionen im Allgemeinen nicht auf.

Bevorzugt werden zur Alkylierung Polyisobutene eingesetzt, die einen Anteil an α- und/oder β-ständigen Doppelbindungen von mindestens 70 Mol-%, besonders bevorzugt mindestens 80 Mol-% und speziell mindestens 85 Mol-% aufweisen.

vorzugsweise werden Polyisobutene eingesetzt, welche gewünschtenfalls als Comonomer bis zu 10 % n-Buten eingebaut enthalten können. Derartige Polyisobutene werden z. B. aus butadienfreien C₄-Schnitten hergestellt, welche in der Regel produktionsbedingt neben Isobuten auch n-Buten enthalten. Besonders bevorzugt sind Isobuten-Homopolymere.

Bevorzugte Polyisobutene sind sogenannte "hochreaktive" Polyisobutene, die sich von den "niedrigreaktiven" Polyisobutenen durch den Gehalt an Doppelbindungen in der α- oder β-Position unterscheiden. Besonders geeignete hochreaktive Polyisobutene sind z. B. die Glissopal®-Marken der BASF AG, wie z. B. Glissopal® 1000 (zahlenmittleres Molekulargewicht Mₙ = 1000) und Glissopal V 33 (Mₙ = 550), die Doppelbindungen überwiegend in der α-Position aufweisen. Besonders bevorzugt sind Polyisobutene, die zu wenigstens 70 Mol-% mit Methylvinylidengruppen (-C(-CH₃)=CH₂) und/oder Dimethylvinylgruppen (-CH=C(CH₃)₂) terminiert sind.

Vorzugsweise werden in dem erfindungsgemäßen Verfahren Katalysator und Cokatalysator in einem Molmengenverhältnis von 1:10 bis 10:1 eingesetzt.

Vorteilhafterweise ermöglicht das erfindungsgemäße Verfahren die im Wesentlichen selektive Monoalkylierung von aromatischen Hydroxyverbindungen, ohne dass, wie im Stand der Technik beschrieben, sehr große Überschüsse an aromatischen Hydroxyverbindungen eingesetzt werden müssen. Vorzugsweise werden aromatische Hydroxyverbindungen und Polyalkene in einem Molmengenverhältnis von 1,5:1 bis 1:1, besonders bevorzugt 1,2:1 bis 1:1 eingesetzt. Speziell können aromatische Hydroxyverbindungen und Polyalken in im Wesentlichen äquimolaren Molmengenverhältnissen, wie 1,1:1 bis 1:1, spezieller 1,05:1 bis 1:1, eingesetzt werden. Selbstverständlich ist jedoch auch ein Überschuss der aromatischen Hydroxyverbindung von 100 % und mehr geeignet. Nach dem erfindungsgemäßen Verfahren werden in der Regel Polyalkenylphenole erhalten, die (sofern das eingesetzte Edukt mehrfache Alkylierungen zulässt) zu höchstens 20 Mol-%, bevorzugt höchstens 10 Mol-%, insbesondere höchstens 5 Mol-%, mehr als einfach mit dem Polyalken alkyliert sind.

In der Regel werden 1 bis 30 Mol-% Katalysator bzw. Katalysator-Cokatalysator-Komplex, bezogen auf das Polyolefin, eingesetzt. In speziellen Fällen können größere Mengen wie 50 Mol-% oder 80 Mol-% Vorteile, z. B. höhere Reaktionsgeschwindigkeit, bieten. Die Komplexe können vorgefertigt sein oder in situ hergestellt werden. Dabei werden die erfindungsgemäßen Lewis-Säuren in Substanz oder in einem inerten Lösungsmittel mit einem oder mehreren Ethern zusammengebracht.

Das erfindungsgemäße Verfahren kann vorteilhafterweise in der Regel lösungsmittelfrei durchgeführt werden. In manchen Fällen ist jedoch die Verwendung eines Kohlenwasserstoffs wie eines n-Alkans oder deren Gemischen als Lösungsmittel von Vorteil. Wegen der geringen Reaktivität des Katalysator/Olefin-Komplexes können auch Alkylaromaten oder Gemische davon eingesetzt werden. Besonders vorteilhaft werden hierbei Aromaten wie Toluol, Ethylbenzol, o-Xylol, m-Xylol, p-Xylol, die Isomeren Trimethylbenzole oder Gemische davon (z. B. die von Exxon Company als "aromatic 100" oder "aromatic 150" verkauften Gemische) eingesetzt, in denen weitere Reaktionsstufen stattfinden können oder das Produkt in den Handel gebracht wird.

Die Alkylierung wird bevorzugt bei Temperaturen zwischen -10 °C und +100 °C durchgeführt. Die genauen Reaktionstemperaturen sind unter anderem abhängig vom verwendeten Katalysator. Ein besonders bevorzugter Temperaturbereich ist 15 bis 60 °C, insbesondere 15 bis 40 °C. Die Reaktion wird üblicherweise bei Atmosphärendruck durchgeführt, kann aber auch bei höheren oder geringeren Drücken durchgeführt werden.

Die Reihenfolge der Zugabe der Reaktionskomponenten ist grundsätzlich nicht wesentlich. Es kann beispielsweise die hydroxyaromatische Verbindung in Substanz oder in Lösung vorgelegt werden, der Katalysator in Substanz, als Addukt oder als Gemisch mit einem Ether zugegeben werden, und schließlich das Polyolefin, ebenfalls in Substanz oder in Lösung zugegeben werden. Alternativ kann auch die hydroxyaromatische Verbindung zusammen mit dem Polyolefin vorgelegt werden und die Lewis-Säure zugegeben werden. Die Reaktion kann mittels einer Base, beispielsweise Ammoniaklösung, abgebrochen werden. Nach dem waschen mit Wasser wird die organische Phase im Allgemeinen nach üblichen Verfahren getrocknet, z. B. über Natriumsulfat oder Magnesiumsulfat, und das Lösungsmittel entfernt.

Nachfolgend sind einige besonders bevorzugte Reaktionssysteme aufgeführt:

### BF₃ und Komplexe

Ein Polyisobutylen mit einem Vinylidengehalt, der unter oder über 70 % liegen kann (z. B. weniger als 50 %, 40 %, 80 %) wird mit Phenol, ortho- oder para-Kresol unter Verwendung von BF₃ als Katalysator gegebenenfalls mit entsprechenden Cokatalysatoren zum Polyisobutenylphenol oder -kresol umgesetzt. Beispielhaft sind die BF₃-Komplexe mit Phenol oder Ethern wie (n-C₃H₇)₂O, (i-C₃H₇)₂O, t-C₄H₉-O-CH₃, t-C₄H₉-O-i-C₃H₇, Tetrahydrofuran, Dicyclohexylether oder Anisol.

### SnCl₄, FeCl₃, TiCl₄ und ihre Komplexe

Ein Homopolyisobutylen mit einem Vinylidengehalt, der unter oder über 70 % liegen kann (z. B. 30, 50 oder 80 %), wird mit Phenol, ortho- oder para-Kresol unter Verwendung von SnCl₄, FeCl₃, TiCl₄ als Lewis-sauren Katalysator gegebenenfalls mit entsprechenden Cokatalysatoren zum Polyisobutenylphenol oder -kresol umgesetzt. Eingesetzt werden bevorzugt SnCl₄-Komplexe, FeCl₃-Komplexe, TiCl₄-Komplexe mit Ethern wie (n-C₃H₇)₂O, (i-C₃H₇)₂O, t-C₄H₉-O-CH₃, t-C₄H₉-O-i-C₃H₇, Tetrahydrofuran, Dicyclohexylether oder Anisol.

Besonders hervorzuheben sind Komplexe mit Ethern in einem Molekulargewichtsbereich von M = 102 bis M = 242 wie (n-C₃H₇)₂O, (i-C₃H₇)₂O, t-C₄H₉-O-CH₃, t-C₄H₉-O-i-C₃H₇, Dicyclohexylether oder Anisol. Hiermit kann ein Homopolymer des Isobutens, das zu mindestens 90 % (z. B. 95 %) aus Isobuteneinheiten besteht und welches in Summe zu mindestens 80 % α- oder β-olefinterminiert ist, besonders einheitlich umgesetzt werden. So erhält man bereits mit geringen Überschüssen (z. B. 5 oder 15 %) an Phenol, o- oder p-Kresol einheitliche 4-Polyisobutenylphenole, 2-Methyl, 4-Polyisobutenylphenole oder 4-Methyl, 2-Polyisobutenylphenole. Diese enthalten weniger als 20 Mol-%, meist weniger als 10 oder 5 Mol-% höher substituierte Isomere, zum Beispiel die Disubstitutionsprodukte. Größere Überschüsse an Phenol oder Kresol sind möglich und führen zu einem noch höheren Anteil eines 4-Isobutenylphenols (aus Phenol oder ortho-Kresol) oder 2-Isobutenylphenols (aus para-Kresol) im Produkt.

Bei Verwendung von BF₃ urid Komplexen davon führt man die Reaktion bevorzugt zwischen -10 °C und 50 °C durch. Besonders einfach kann zwischen 15 °C und 40 °C alkyliert werden. Bei SnCl₄ und FeCl₃ und Komplexen davon führt man die Reaktion bevorzugt zwischen -10 °C und 100 °C durch, bei TiCl₄ und Komplexen davon zwischen -10 °C und 80 °C. Besonders einfach kann in diesen Fällen zwischen 15 °C und 60 °C alkyliert werden.

Die nach dem erfindungsgemäßen Verfahren erhaltenen Polyisobutenylphenole eignen sich für eine Vielzahl technischer Anwendungen und insbesondere als Kraftstoffadditive sowie als Zwischenprodukte für die Herstellung von Kraftstoffdetergenzien.

Ein weiterer Gegenstand der Erfindung ist ein Verfahren zur Herstellung funktionalisierte Polyisobutenylphenole, umfassend:
i) die Herstellung von Polyisobutenylphenolen durch Alkylierung einer aromatischen Hydroxyverbindung mit im Wesentlichen einfach ethylenisch ungesättigten Polyisobutenen in Gegenwart eines Lewis-sauren Alkylierungskatalysators, wie zuvor beschrieben, und
ii) die Funktionalisierung der in Schritt i) erhaltenen Polyisobutenylphenole durch Aminoalkylierung und/oder Polyetherbildung.

Geeignete Verfahren zur Herstellung von Polyisobutenylphenol-haltigen Mannichaddukten sind dem Fachmann bekannt und werden z. B. in der EP-A-0 831 141 und der unveröffentlichten deutschen Patentanmeldung P 199 48 114.8 beschrieben, worauf hier in vollem Umfang Bezug genommen wird.

Die Erfindung wird nachstehend anhand von Beispielen dargelegt, die erläuternd, nicht beschränkend zu verstehen sind.

### Beispiel 1:

In einem Vierhalskolben werden 28 g Phenol mit 10 ml Toluol angelöst. Man tropft 6,3 ml BF₃-Diisopropyletheraddukt zu und lässt 250 g Polyisobuten (Mn = 1000, Gehalt Methylvinyliden-Endgruppe von 80 %) gelöst in 100 ml Toluol bei 20 bis 25 °C zutropfen. Es wird 4 h bei 25 °C nachgerührt. Es wird mit 100 ml 5 % Ammoniaklösung abgebrochen. Die organische Phase wird mit Wasser gewaschen, über NaSO₄ getrocknet und einrotiert:

### 230 g Öl ("PIB-Phenol")

### NMR:

7,2 ppm (Dublett, 2H), 6,7 ppm (Dublett, 2H), 4,8 ppm (Singulett, 1H), 1,75 ppm (Singulett, 2H), 1,5-0,5 ppm (Singuletts, 140H)

Das entspricht einem Mn des Alkylrests von 1000.

Im Signalbereich von 7,1 bis 6,75 ppm befinden sich kleine Signale, die für 5 bis 10 % 2- oder 2,4-substituiertes Phenol stehen können.

### Beispiel 2:

In einem Vierhalskolben werden 200 g Polyisobuten (Mn = 1000, Gehalt Methylvinyliden-Endgruppe von 80 %), 50 ml Hexan und 23 g Phenol vorgelegt. Man lässt ein Gemisch aus 20 ml Hexan, 5,2 g SnCl₄ und 2 g Diisopropylether zulaufen. Man rührt nun 5 h bei 30 °C. Der Ansatz wird mit 200 ml Hexan aufgenommen, 3-mal mit 10 % HCl und 3-mal mit Wasser gewaschen. Die organische Phase wird mit Na₂SO₄ getrocknet und bei 60 °C/5 mbar eingeengt: 214 g Öl

### NMR:

7,2 ppm (Dublett, 2H), 6,7 ppm (Dublett, 2H), 4,8 ppm (Singulett, 1H), 1,75 ppm (Singulett, 2H), 1,5-0,5 ppm (Singuletts, 140H)

Das entspricht einem para-substituierten Phenol.

Im Signalbereich von 7,1 bis 6,75 ppm befinden sich kleine Signale, die für 5 bis 10 % 2- oder 2,4-substituiertes Phenol stehen können.

### Beispiel 3:

In einem Vierhalskolben werden 200 g Polyisobuten (Mn = 1000, Gehalt Methylvinyliden-Endgruppe von 80 %), 50 ml Toluol und 23 g Phenol vorgelegt. Man lässt ein Gemisch aus 10 ml Hexan, 3,2 g FeCl₃ und 2 g Diisopropylether zulaufen. Man rührt nun 5 h bei 30 °C. Der Ansatz wird mit 200 ml Hexan aufgenommen, 3-mal mit 10 % HCl und 3-mal mit Wasser gewaschen. Die organische Phase wird mit Na₂SO₄ getrocknet und bei 60 °C/5 mbar eingeengt: 165 g Öl.

### NMR:

7,2 ppm (Dublett, 2H), 6,7 ppm (Dublett, 2H), 4,8 ppm (Singulett, 1H), 1,75 ppm (Singulett, 2H), 1,5-0,5 ppm (Singuletts, 141H)

Das entspricht einem para-substituierten Phenol.

Im Signalbereich von 7,1 bis 6,75 ppm befinden sich kleine Signale, die für 5 bis 10 % 2- oder 2,4-substituiertes Phenol stehen können.

## Patentansprüche

1. Verfahren zur Herstellung von Polyisobutenylphenolen durch Alkylierung einer aromatischen Hydroxyverbindung mit im Wesentlichen einfach ethylenisch ungesättigten und im Wesentlichen homopolymeren Polyisobutenen in Gegenwart eines Lewis-sauren Alkylierungskatalysators, **dadurch gekennzeichnet, dass** zusätzlich ein Ether als Cokatalysator eingesetzt wird, wobei im Falle von BF₃ als Lewis-Säure der Ether ein Molekulargewicht von mindestens 102 g/mol aufweist.

2. Verfahren nach Anspruch 1, **dadurch gekennzeichnet, dass** der Katalysator ausgewählt ist unter den Halogeniden von Bor, Aluminium, Zinn oder einem Übergangsmetall.

3. Verfahren nach Anspruch 2, **dadurch gekennzeichnet, dass** der Katalysator ausgewählt ist unter BF₃, SnCl₄, TiCl₄ und FeCl₃.

4. Verfahren nach einem der vorhergehenden Ansprüche, **dadurch gekennzeichnet, dass** der Ether ein Molekulargewicht im Bereich von 102 bis 242 g/mol aufweist.

5. Verfahren nach einem der vorhergehenden Ansprüche, **dadurch gekennzeichnet, dass** Katalysator und Cokatalysator in einem Molmengenverhältnis von 1:10 bis 10:1 eingesetzt werden.

6. Verfahren nach einem der vorhergehenden Ansprüche, **dadurch gekennzeichnet, dass** aromatische Hydroxyverbindungen und Polyalkylene in einem Molmengenverhältnis von 1,5:1 bis 1:1, bevorzugt 1,2:1 bis 1:1 eingesetzt werden.

7. Verfahren nach einem der vorhergehenden Ansprüche, **dadurch gekennzeichnet, dass** die erhaltenen Polyisobutenylphenole zu höchstens 20 Mol-%, bevorzugt höchstens 10 Mol-%, insbesondere höchstens 5 Mol-%, mehr als einfach mit dem Polyisobuten alkyliert sind.

8. Verfahren nach einem der vorhergehenden Ansprüche, umfassend zusätzlich die Funktionalisierung der Polyisobutenylphenole durch Aminoalkylierung und/oder Polyetherbildung.

## Claims

1. A process for the preparation of polyisobutenylphenols by alkylating an aromatic hydroxy compound with substantially monoethylenically unsaturated and substantially homopolymeric polyisobutenes in the presence of a Lewis acid alkylation catalyst, wherein in addition an ether is used as a cocatalyst, the ether having a molecular weight of at least 102 g/mol in the case of BF₃ as the Lewis acid.

2. A process as claimed in claim 1, wherein the catalyst is selected from the halides of boron, aluminum, tin or a transition metal.

3. A process as claimed in claim 2, wherein the catalyst is selected from BF₃, SnCl₄, TiCl₄ and FeCl₃.

4. A process as claimed in any of the preceding claims, wherein the ether has a molecular weight of from 102 to 242 g/mol.

5. A process as claimed in any of the preceding claims, wherein catalyst and cocatalyst are used in a molar ratio of from 1:10 to 10:1.

6. A process as claimed in any of the preceding claims, wherein aromatic hydroxy compounds and polyalkylenes are used in a molar ratio of from 1.5:1 to 1:1, preferably from 1.2:1 to 1:1.

7. A process as claimed in any of the preceding claims, wherein the polyisobutenylphenols obtained are polyalkylated with the polyisobutene to a degree of not more than 20, preferably not more than 10, in particular not more than 5, mol%.

8. A process as claimed in any of the preceding claims, additionally comprising the functionalization of polyisobutenylphenols by aminoalkylation and/or polyether formation.

## Revendications

1. Procédé de production de polyiisobuténylphénols au moyen de l'alkylation d'un composé hydroxyle aromatique avec des polyisobutènes essentiellement à insaturation monoéthylénique et essentiellement homopolymères en présence d'un catalyseur d'alkylation acide de Lewis, **caractérisé en ce que** l'on met en oeuvre en plus un éther en tant que co-catalyseur, l'éther présentant, dans le cas de BF₃ en tant qu'acide de Lewis, une masse moléculaire d'au moins 102 g/mole.

2. Procédé selon la revendication 1, **caractérisé en ce que** le catalyseur est choisi parmi les halogénures du bore, de l'aluminium, de l'étain ou d'un métal de transition.

3. Procédé selon la revendication 2, **caractérisé en ce que** le catalyseur est choisi parmi BF₃, SnCl₄, TiCl₄ et FeCl₃.

4. Procédé selon l'une quelconque des revendications précédentes, **caractérisé en ce que** l'éther présente une masse moléculaire dans la gamme de 102 à 242 g/mole.

5. Procédé selon l'une quelconque des revendications précédentes, **caractérisé en ce que** le catalyseur et le co-catalyseur sont mis en oeuvre dans un rapport molaire de 1:10 à 10:1.

6. Procédé selon l'une quelconque des revendications précédentes, **caractérisé en ce que** les composés hydroxyle aromatiques et les polyalkylènes sont mis en oeuvre dans un rapport molaire de 1,5:1 à 1:1, de préférence de 1,2:1 à 1:1.

7. Procédé selon l'une quelconque des revendications précédentes, **caractérisé en ce que** les polyisobuténylphénols obtenus sont polyalkylés avec le polyisobutène au maximum à 20% en moles, de préférence au maximum à 10% en moles, en particulier au maximum à 5% en moles.

8. Procédé selon l'une quelconque des revendications précédentes, comprenant en plus la fonctionnalisation des polyisobutènephénols au moyen d'une aminoalkylation et/ou d'une formation de polyéther.
